# EUROPEAN PATENT APPLICATION

(11) **EP 4 663 076 A1**
(43) Date of publication of application: **17.12.2025**
(21) Application number: 23920784.8
(22) Date of filing: 06.11.2023
(51) Int. Cl.: A47J 36/32, A47J 27/04, A47J 37/06

(54) **CONTROL METHOD AND APPARATUS FOR COOKING UTENSIL, STORAGE MEDIUM, AND COOKING UTENSIL**

(30) Priority: 10.02.2023 CN 202310115146
(71) Applicant: Guangdong Midea Kitchen Appliances Manufacturing Co., Ltd., Foshan, Guangdong 528311 (CN)
(72) Inventor: JIA, Yuze, Foshan, Guangdong 528311 (CN); ZHU, Zhifei, Foshan, Guangdong 528311 (CN); HUANG, Hua, Foshan, Guangdong 528311 (CN); YUAN, Shuangxia, Foshan, Guangdong 528311 (CN); WEI, Tianyi, Foshan, Guangdong 528311 (CN); ZHANG, Zhi, Foshan, Guangdong 528311 (CN); TANG, Xiangwei, Foshan, Guangdong 528311 (CN)
(74) Representative: RGTH
(86) International application number: PCT/CN2023/129999
(87) International publication number: WO 2024/164592

(57) **Abstract**

A control method of a cooking utensil, characterized in that the cooking utensil is provided with a gas replacement module. The method includes: acquiring a type of an ingredient in a cooking chamber of the cooking utensil; determining a total cooking duration based on the type of the ingredient; determining a dehumidification cooking duration and a non-dehumidification cooking duration for the cooking utensil based on the type of the ingredient or the total cooking duration; and controlling the gas replacement module based on the dehumidification cooking duration and the non-dehumidification cooking duration to replace gas in the cooking chamber with outside air.

## Description

### CROSS-REFERENCE TO RELATED APPLICATION

This application claims priority to Chinese Patent Application No. 202310115146.X, titled "CONTROL METHOD AND APPARATUS OF COOKING UTENSIL, STORAGE MEDIUM, AND COOKING UTENSIL", and filed on February 10, 2023 by Guangdong Midea Kitchen Appliances Manufacturing Co., Ltd.

### FIELD

The present invention relates to the field of cooking utensil technologies, and more particularly, to a control method of a cooking utensil, a computer-readable storage medium, a cooking utensil, and a control apparatus of a cooking utensil.

### BACKGROUND

With an increasing demand for higher quality of life, kitchen utensils have become increasingly widespread.

However, in order to ensure no leakage of steam generated during cooking, steam ovens and steamers in the related art have been well sealed, making it difficult to cool down and dehumidify chambers. A blast of hot steam is likely to gush towards a user's face upon opening, which may easily scald the user. In addition, cooking conditions of different ingredients cannot be met, affecting a cooking effect.

### SUMMARY

The present invention aims to solve one of the technical problems in the related art at least to some extent.

To this end, the present invention provides a control method of a cooking utensil, which can improve a cooking effect of the cooking utensil on an ingredient and reduce a possibility of high-temperature and high-humidity gas gushing towards a user's face when opening a cooking chamber.

According to embodiments of the present invention, there is provided a computer-readable storage medium.

According to embodiments of the present invention, there is provided a cooking utensil.

According to embodiments of the present invention, there is provided a cooking apparatus of a cooking utensil.

In the control method of the cooking utensil according to the present invention, the control method comprises: acquiring a type of an ingredient in a cooking chamber of the cooking utensil; determining a total cooking duration based on the type of the ingredient; determining a dehumidification cooking duration and a non-dehumidification cooking duration of the cooking utensil based on the type of the ingredient or the total cooking duration; and controlling the gas replacement module based on the dehumidification cooking duration and the non-dehumidification cooking duration to replace gas in the cooking chamber with outside air.

Therefore, the type of the ingredient can be determined by acquiring the information of the type of the ingredient in the cooking chamber of the cooking utensil, and the total cooking duration can be determined based on the type of the ingredient. The dehumidification cooking duration and the non-dehumidification cooking duration of the cooking utensil can be determined based on the type of the ingredient or the total cooking duration. When the cooking utensil operates during the dehumidification cooking duration, the gas replacement module is activated to cool down and dehumidify the cooking chamber. When the cooking utensil operates during the non-dehumidification cooking duration, the gas replacement module is deactivated to shut off gas exchange between the cooking chamber and an ambient environment. By controlling a temperature and humidity in the cooking chamber, a cooking environment in the cooking chamber can meet cooking requirement for different ingredients, improving the cooking effect. Moreover, the possibility of the high-temperature and high-humidity gas gushing towards the user's face when opening the cooking utensil by the user, preventing the user from being scalded. In this way, user experience can be enhanced.

Additional aspects and advantages of the embodiments of present invention will be provided at least in part in the following description, or will become apparent in part from the following description, or can be learned from the practice of the embodiments of the present invention.

### BRIEF DESCRIPTION OF THE DRAWINGS

FIG. 1 is a flowchart of a control method of a cooking utensil according to an embodiment of the present invention.
FIG. 2A is a schematic structural diagram of a gas replacement module of a cooking utensil according to an embodiment of the present invention when the gas replacement module stops operating.
FIG. 2B is a schematic structural diagram of a gas replacement module of a cooking utensil according to an embodiment of the present invention during operation.
FIG. 2C is a schematic structural diagram of a gas replacement module of a cooking utensil according to another embodiment of the present invention when the gas replacement module stops operating.
FIG. 2D is a schematic structural diagram of a gas replacement module of a cooking utensil according to another embodiment of the present invention during operation.
FIG. 2E is a schematic structural diagram of a gas replacement module of a cooking utensil according to yet another embodiment of the present invention when the gas replacement module stops operating.
FIG. 2F is a schematic structural diagram of a gas replacement module of a cooking utensil according to yet another embodiment of the present invention during operation.
FIG. 2G is a schematic structural diagram of a gas replacement module of a cooking utensil according to still yet another embodiment of the present invention when the gas replacement module stops operating.
FIG. 2H is a schematic structural diagram of a gas replacement module of a cooking utensil according to still yet another embodiment of the present invention during operation.
FIG. 3 is a flowchart of a control method of a cooking utensil according to another embodiment of the present invention.
FIG. 4 is a structural block diagram of a cooking utensil according to an embodiment of the present invention.
FIG. 5 is a structural block diagram of a cooking apparatus of a cooking utensil according to an embodiment of the present invention.
FIG. 6 is a schematic graph of humidity variation in a cooking chamber of a cooking utensil according to an embodiment of the present invention.
FIG. 7 is a data comparison diagram of the cooking utensil according to the embodiment described in the present invention and a cooking utensil of the related art.

### DETAILED DESCRIPTION

The embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present invention.

A control method of a cooking utensil, a computer-readable storage medium, a cooking utensil, and a cooking apparatus of a cooking utensil according to embodiments of the present invention are described below with reference to the accompanying drawings.

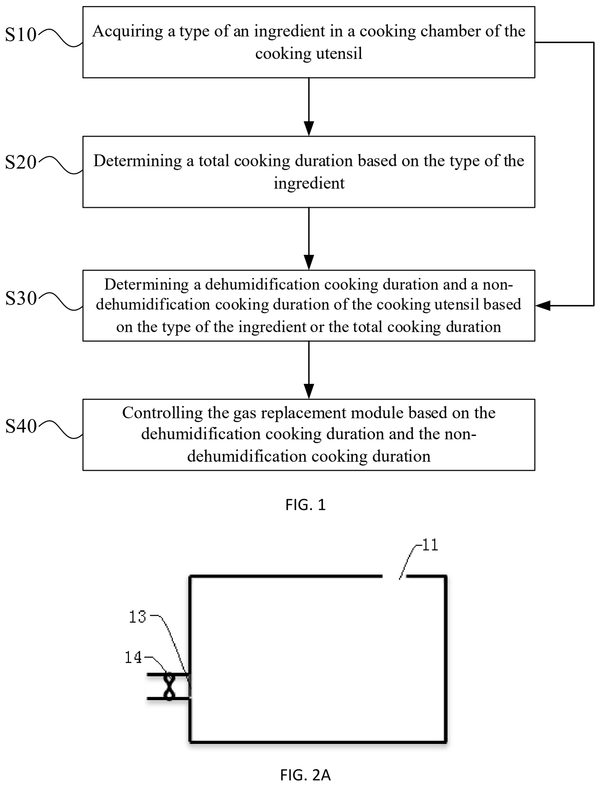

FIG. 1 is a flowchart of a control method of a cooking utensil according to an embodiment of the present invention.

The present invention provides a control method of a cooking utensil. The control method of the cooking utensil according to the embodiments of the present invention can be applied in the cooking utensil such as a steam oven. The control method of the cooking utensil comprises actions at steps S10 to S40.

At S10, a type of an ingredient in a cooking chamber of the cooking utensil is acquired.

When a user needs to cook food, they may place different ingredients in the cooking chamber as desired. Due to the different types of the ingredients, a cooking duration varies based on the type of the ingredient. For example, when the user needs to fry French fries or bake dried fruits, the cooking duration may vary, and the structural configuration of the cooking utensil may also affect the cooking duration.

Since the cooking duration is related to the type of the ingredient, information of the type of the ingredient is first acquired in the control method according to the embodiment of the present invention. The cooking utensil may be provided with an electronic tag reader-writer. The electronic tag reader-writer is configured to identify, prior to food cooking, the type of the ingredient through an electronic tag on an ingredient, to allow the gas replacement module to acquire the information of the type of the ingredient. The cooking chamber may be provided with an image recognition device. The image recognition device may be communicatively connected to an intelligent terminal. The image recognition device is configured to collect image information of the ingredient and transmit the collected image information of the ingredient to the intelligent terminal. The intelligent terminal is configured to identify the type of the ingredient and is communicatively connected to the gas replacement module to acquire the information of the type of the ingredient by the gas replacement module. In addition, the information of the type of the ingredient may also be manually inputted.

The specific device for transmitting the information of the type of the ingredient is not specifically limited herein as long as the gas replacement module can acquire the information of the type of the ingredient.

At S20, a total cooking duration is determined based on the type of the ingredient.

The type of ingredient can affect the total cooking duration, with different types of ingredients resulting in different total cooking durations. For example, information of types of ingredients and total cooking durations corresponding thereto in this embodiment may be first stored in a memory in a form of a table based on experimental data. After the information of the type of the ingredient is acquired, the total cooking duration can be directly determined by looking up the table, thereby improving cooking efficiency and the cooking effect of the cooking utensil. Of course, the total cooking duration may also be manually set. That is, the total cooking duration for the ingredient is manually inputted by the user, and the specific inputting mode may be determined by a manufacturer or the user, which is not specifically limited herein.

At S30, a dehumidification cooking duration and a non-dehumidification cooking duration for the cooking utensil are determined based on the type of the ingredient or the total cooking duration.

At S40, the gas replacement module is controlled based on the dehumidification cooking duration and the non-dehumidification cooking duration to replace gas in the cooking chamber with outside air.

In the control method, whether the dehumidification cooking duration or the non-dehumidification cooking duration is reached can be determined based on the type of the ingredient or the total cooking duration. When the cooking utensil operates during the dehumidification cooking duration, the gas replacement module may be controlled to be activated. When the cooking utensil operates during the non-dehumidification cooking duration, the gas replacement module may be controlled to be deactivated.

When the cooking utensil cooks the ingredient, high-temperature and high-humidity gas is generated in the cooking chamber. When the cooking utensil operates during the dehumidification cooking duration, the gas replacement module is activated to allow gas exchange between the high-temperature and high-humidity gas in the cooking chamber and an ambient environment, to cool down and dehumidify the cooking chamber. When the cooking utensil operates during the non-dehumidification cooking duration, the gas replacement module is deactivated to shut off the gas exchange between the cooking chamber and the ambient environment, to allow an environment in the cooking chamber to have a temperature and humidity required for the food cooking.

Moreover, the present invention can reduce the possibility of the high-temperature and high-humidity gas gushing towards the user's face when opening the cooking utensil by the user, preventing the user from being scalded. In this way, safety of the cooking utensil can be improved while the user experience can be enhanced.

According to the control method of the cooking utensil of the present invention, the type of the ingredient can be determined by acquiring the information of the type of the ingredient in the cooking chamber of the cooking utensil, and the total cooking duration can be determined based on the type of the ingredient. The dehumidification cooking duration and the non-dehumidification cooking duration for the cooking utensil can be determined based on the type of the ingredient or the total cooking duration. When the cooking utensil operates during the dehumidification cooking duration, the gas replacement module is activated to cool down and dehumidify the cooking chamber. When the cooking utensil operates during the non-dehumidification cooking duration, the gas replacement module is deactivated to shut off the gas exchange between the cooking chamber and the ambient environment. By controlling the temperature and the humidity in the cooking chamber, the cooking environment in the cooking chamber can meet cooking requirements for the different ingredients, improving the cooking effect. Moreover, the possibility of the high-temperature and high-humidity gas gushing towards the user's face when opening the cooking utensil by the user, preventing the user from being scalded. In this way, the user experience can be enhanced.

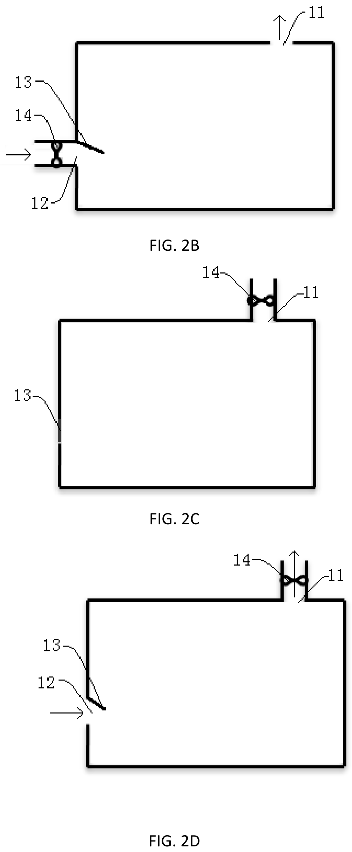

As shown in FIGS. 2A and 2B, in some embodiments of the present invention, a gas replacement module comprises a gas outlet 11, an air inlet 12, a valve 13, and a fan 14. The gas outlet 11 is formed at a top of the cooking utensil. The air inlet 12 is formed at a side wall of a lower part of the cooking utensil. The valve 13 has an end rotatably connected to an end of the air inlet 12. The valve 13 is configured to control opening and closing of the air inlet 12. The fan 14 is arranged to correspond to the valve 13. The controlling the gas replacement module based on the dehumidification cooking duration and the non-dehumidification cooking duration comprises: controlling, in response to a cooking duration for the cooking utensil reaching the dehumidification cooking duration, the fan 14 to operate to open the valve 13, to allow the outside air to flow into the cooking chamber through the air inlet 12 and to discharge the gas in the cooking chamber through the gas outlet 11, completing gas replacement; and controlling, in response to the cooking duration for the cooking utensil reaching the non-dehumidification cooking duration, the fan 14 to stop operating, to prohibit the outside air from flowing into the cooking chamber through the air inlet 12.

The air inlet 12 extends vertically at a side wall of the cooking chamber. Further, the air inlet 12 is configured to bring the cooking chamber into communication with the ambient environment. The valve 13 is disposed at the side wall of the cooking chamber and extends vertically to selectively close the air inlet 12. The valve 13 has an upper end pivotally connected to an upper end of the air inlet 12. The fan 14 is configured to control a cooperation state of the valve 13 and the air inlet 12 to control the opening and the closing of the air inlet 12. As shown in FIG. 2A, when the cooking duration for the cooking utensil falls within the non-dehumidification cooking duration, the fan 14 is in a deactivated state, and the valve 13 is pulled downwards by its own gravity, thereby blocking the air inlet 12 to prevent the outside air from flowing into the cooking chamber through the air inlet 12. Due to a small size of the gas outlet 11, the gas in the cooking chamber cannot quickly escape from the cooking chamber through the gas outlet 11, thus preventing the gas replacement between the cooking chamber and the ambient environment.

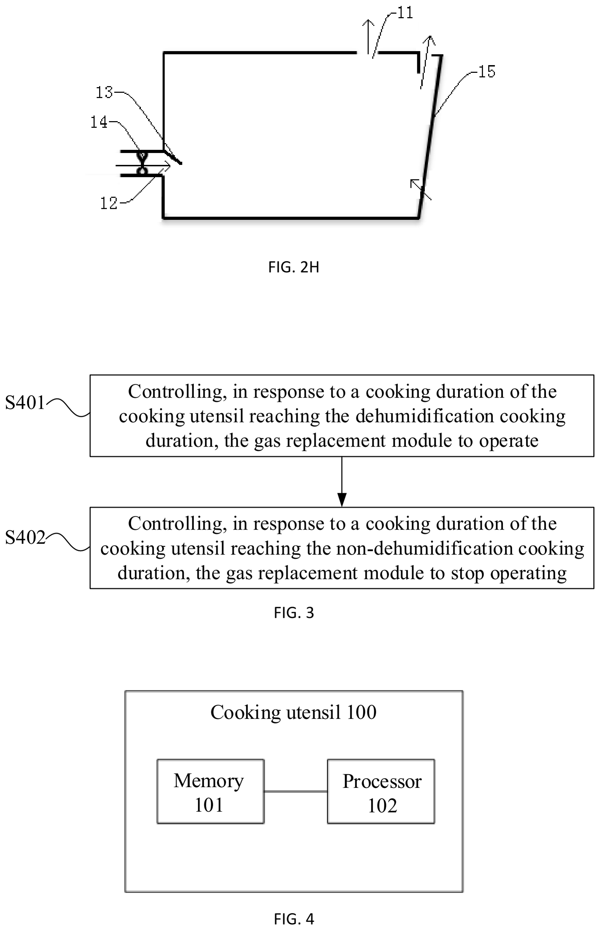

As shown in FIGS. 2B and 3, when the cooking duration for the cooking utensil falls within the dehumidification cooking duration, the fan 14 is activated to generate a low-temperature and low-humidity airflow. The airflow may drive the valve 13 to rotate around the connection between the valve 13 and the air inlet 12 to open the air inlet 12. Moreover, the airflow may flow into the cooking chamber through the air inlet 12, and the high-temperature and high-humidity gas in the cooking chamber driven by the low-temperature and low-humidity airflow quickly escapes from the cooking chamber through the gas outlet 11, thereby completing the gas replacement between the gas in the cooking chamber and the ambient environment. In this way, a temperature and humidity of the gas in the cooking chamber are reduced.

As shown in FIGS. 2C and 2D, in some embodiments of the present invention, the gas replacement module comprises a gas outlet 11, an air inlet 12, a valve 13, and a fan 14. The gas outlet 11 is formed at a top of the cooking utensil. The fan 14 is arranged to correspond to the gas outlet 11. The air inlet 12 is formed at a side wall of a lower part of the cooking utensil. The valve 13 has an end rotatably connected to an end of the air inlet 12. The valve 13 is configured to control opening and closing of the air inlet 12. The controlling the gas replacement module based on the dehumidification cooking duration and the non-dehumidification cooking duration comprises: controlling, in response to the cooking duration for the cooking utensil reaching the dehumidification cooking duration, the fan 14 to operate, to discharge the gas in the cooking chamber through the gas outlet 11 and to allow the outside air to flow into the cooking chamber through the valve 13, completing gas replacement; and controlling, in response to the cooking duration for the cooking utensil reaching the non-dehumidification cooking duration, the fan 14 to stop operating, to prohibit the outside air from flowing into the cooking chamber through the air inlet 12.

The air inlet 12 extends vertically at a side wall of the cooking chamber. Further, the air inlet 12 is configured to bring the cooking chamber into communication with the ambient environment. The valve 13 is disposed at the side wall of the cooking chamber and extends vertically. The valve 13 has an upper end pivotally connected to an upper end of the air inlet 12. The fan 14 is connected to the gas outlet 11. Further, the fan 14 is configured to control a cooperation state of the valve 13 and the air inlet 12 to control the opening and the closing of the air inlet 12. As shown in FIG. 2C, when the cooking duration for the cooking utensil falls within the non-dehumidification cooking duration, a state of the cooking utensil with such a structural configuration during the non-dehumidification cooking duration is the same as that of the above-mentioned embodiment during the non-dehumidification cooking duration, and details thereof are omitted herein.

Referring to FIG. 2D, when the cooking duration for the cooking utensil falls within the dehumidification cooking duration, the fan 14 is activated, increasing an airflow velocity and decreasing an air pressure near the gas outlet 11. Therefore, a pressure in the cooking chamber is greater than a pressure near the gas outlet 11, forcing the high-temperature and high-humidity gas in the cooking chamber to quickly escape through the gas outlet 11. As a result, the pressure in the cooking chamber decreases, and a pressure near the air inlet 12 is greater than the pressure in the cooking chamber. The valve 13 is driven by the air pressure to rotate about the connection between the valve 13 and the air inlet 12 to open the air inlet 12. Low-temperature and low-humidity gas from the ambient environment can thus flow into the cooking chamber through the air inlet 12, thereby realizing the gas replacement between the gas in the cooking chamber and the outside air. In this way, the temperature and the humidity of the gas in the cooking chamber are reduced.

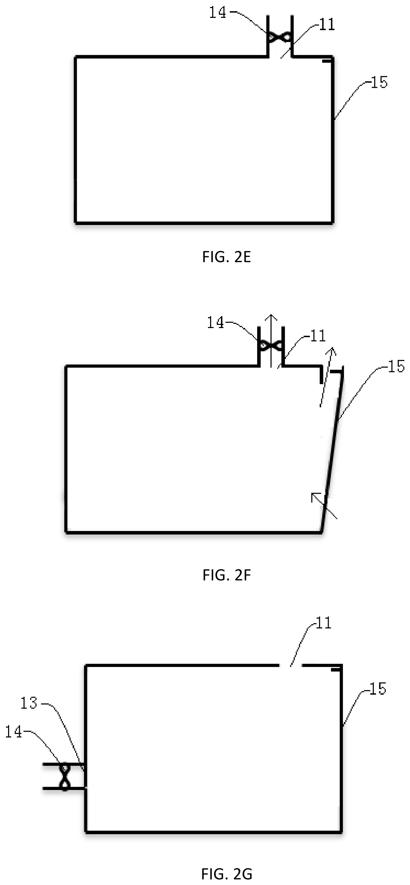

Referring to FIGS. 2E and 2F, in some embodiments of the present invention, the gas replacement module comprises a gas outlet 11, a fan 14, and a push door structure 15. The gas outlet 11 is formed at a top of the cooking utensil. The fan 14 is arranged to correspond to the gas outlet 11. The push door structure 15 is disposed at a side of the cooking utensil. The push door structure 15 is configured to increase a gas exchange area of the cooking chamber. The controlling the gas replacement module based on the dehumidification cooking duration and the non-dehumidification cooking duration comprises: controlling, in response to a cooking duration for the cooking utensil reaching the dehumidification cooking duration, the fan 14 to operate and the push door structure 15 to open, to discharge the gas in the cooking chamber through the gas outlet 11 and an opening of the push door structure 15 and to allow the outside air to flow into the cooking chamber through the opening of the push door structure 15, completing gas replacement; and controlling, in response to the cooking duration for the cooking utensil reaching the non-dehumidification cooking duration, the fan 14 to stop operating and the push door structure 15 to close, to prohibit the outside air from flowing into the cooking chamber through the opening of the push door structure 15.

The gas outlet 11 extends through a top wall of the cooking utensil to bring the cooking chamber into communication with the ambient environment. The push door structure 15 may have an end pivotally connected to a side wall of the cooking utensil, and the gas exchange area of the cooking chamber may be adjusted by controlling the push door structure 15. The push door structure 15 may comprise a push door and a door opening device. The door opening device may be configured as an electric motor push rod or a wax motor push rod to automatically control opening and closing of the push door.

Referring FIG. 2E, when the cooking duration for the cooking utensil falls within the non-dehumidification cooking duration, the fan 14 and the push door structure 15 are both in a closed state. Due to the small size of the gas outlet 11, the gas in the cooking chamber cannot quickly escape from the cooking chamber through the gas outlet 11, thereby preventing the gas replacement between the cooking chamber and the ambient environment.

As shown in FIG. 2F, when the cooking duration for the cooking utensil falls within the dehumidification cooking duration, the fan 14 and the door opening device can be controlled to be activated simultaneously. The push door is driven by the door opening device to open, increasing the gas exchange area of the cooking chamber. The high-temperature and high-humidity gas may spontaneously diffuse through an opening of the push door. Meanwhile, the fan 14 operates, increasing the airflow velocity and decreasing the air pressure near the gas outlet 11. Therefore, the pressure in the cooking chamber is greater than the pressure near the gas outlet 11, forcing the high-temperature and high-humidity gas in the cooking chamber to quickly escape through the gas outlet 11. As a result, escape efficiency of the high-temperature and high-humidity gas is increased. Meanwhile, the pressure in the cooking chamber is reduced, and thus outside air may flow into the cooking chamber through a gap formed by two sides of the push door and the side wall of the cooking utensil to realize the gas replacement. In this way, the temperature and the humidity of the gas in the cooking chamber are reduced.

When the cooking duration for the cooking utensil is switched into the non-dehumidification cooking duration from the dehumidification cooking duration, the door opening device may drive the push door to close, and the fan 14 is deactivated, thereby preventing the gas replacement between the cooking chamber and the ambient environment.

Referring to FIGS. 2G and 2H, in some embodiments of the present invention, the gas replacement module comprises a gas outlet 11, an air inlet 12, a valve 13, a fan 14, and a push door structure 15. The gas outlet 11 is formed at a top of the cooking utensil. The air inlet 12 is formed at a lower part of a side of the cooking utensil. The valve 13 has an end rotatably connected to an end of the air inlet 12. The valve 13 is configured to control opening and closing of the air inlet 12. The fan 14 is arranged to correspond to the valve 13. The push door structure 15 is disposed at another side of the cooking utensil. The push door structure 15 is configured to increase a gas exchange area of the cooking chamber. The controlling the gas replacement module based on the dehumidification cooking duration and the non-dehumidification cooking duration comprises: controlling, in response to a cooking duration for the cooking utensil reaching the dehumidification cooking duration, the fan 14 to operate and the push door structure 15 to open, to discharge the gas in the cooking chamber through the gas outlet 11 and an opening of the push door structure 15 and to allow the outside air to flow into the cooking chamber through the air inlet 12 and the opening of the push door structure 15, completing gas replacement; and controlling, in response to the cooking duration for the cooking utensil reaching the non-dehumidification cooking duration, the fan 14 to stop operating and the push door structure 15 to close, to prohibit the outside air from flowing into the cooking chamber through the air inlet 12 and the opening of the push door structure 15.

The gas outlet 11 extends through a top wall of the cooking utensil to bring the cooking chamber into communication with the ambient environment. The push door structure 15 may have an end pivotally connected to the side wall of the cooking utensil, and the gas exchange area of the cooking chamber may be adjusted by controlling the push door structure 15. The air inlet 12 may be formed at a side wall of the cooking chamber opposite to the push door structure 15, and the fan 14 is opposite to the air inlet 12.

Referring to FIG. 2G, when the cooking duration for the cooking utensil falls within the non-dehumidification cooking duration, the fan 14 and the push door structure 15 are in a closed state. Due to the small size of the gas outlet 11, the gas in the cooking chamber cannot quickly escape from the cooking chamber through the gas outlet 11, thereby preventing the gas replacement between the cooking chamber and the ambient environment.

As shown in FIG. 2H, when the cooking duration for the cooking utensil falls within the dehumidification cooking duration, the fan 14 and the push door structure 15 are opened simultaneously. The push door is driven by the door opening device to open, increasing the gas exchange area of the cooking chamber. The high-temperature and high-humidity gas may spontaneously diffuse through the opening of the push-door. Meanwhile, the fan 14 operates to generate a low-temperature and low-humidity airflow, and the valve 13 is thus driven by the airflow to open, opening the air inlet 12. Moreover, the airflow may flow into the cooking chamber through the air inlet 12, and the high-temperature and high-humidity gas in the cooking chamber is simultaneously quickly discharged out of the cooking chamber through the gas outlet 11 at the opening of the push door, thereby improving gas replacement efficiency. In this way, the temperature and the humidity of the gas in the cooking chamber are reduced.

**In** some other embodiments of the present invention, the gas replacement module comprises a gas outlet 11 and a push door structure 15. When the cooking duration for the cooking utensil falls within the non-dehumidification cooking duration, the push door structure 15 is in a closed state. Due to the small size of the gas outlet 11, the gas in the cooking chamber cannot quickly escape from the cooking chamber through the gas outlet 11, thereby preventing the gas replacement between the cooking chamber and the ambient environment.

When the cooking duration for the cooking utensil falls within the dehumidification cooking duration, the push door structure 15 is opened. Due to a difference in each of gas density and fluidity between an interior and an exterior of the cooking chamber, the high-temperature and high-humidity gas in the cooking chamber may spontaneously diffuse from the cooking chamber to the ambient environment through the opening of the push door, and the low-temperature and low-humidity gas from the ambient environment may flow into the cooking chamber through a gap between the push door and the side wall of the cooking chamber, thereby realizing the gas replacement.

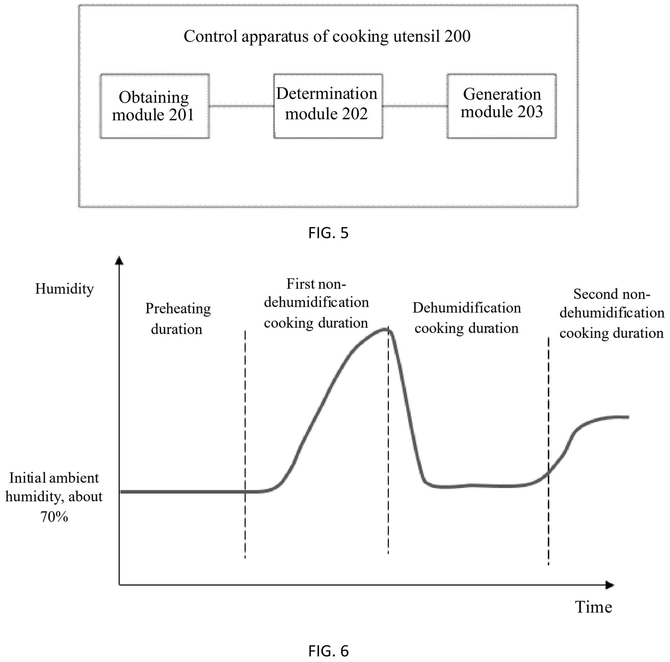

Referring to FIGS. 5 and 6, in some embodiments of the present invention, the non-dehumidification cooking duration comprises a first non-dehumidification cooking duration and a second non-dehumidification cooking duration, and the total cooking duration comprises the first non-dehumidification cooking duration, the dehumidification cooking duration, and the second non-dehumidification cooking duration.

The cooking utensil further has a preheating duration, during which a cooking temperature may be set to range from 150°C to 250°C. For example, a cooking temperature required for a cake ingredient ranges from 150°C to 180°C, and a cooking temperature required for a dried fruit ingredient ranges from 70°C to 100°C. By setting the cooking temperature to range from 150°C to 250°C, with initial ambient humidity in the cooking chamber about 70%, cooking requirements for the ingredients of the different types can be met.

FIG. 3 is a flowchart of a control method of a cooking utensil according to an embodiment of the present invention.

After preheating of the cooking chamber is completed, the ingredient is placed in the cooking chamber. The total cooking duration is determined based on the type of the ingredient, thereby determining the dehumidification cooking duration and the non-dehumidification cooking duration for the cooking utensil. When the cooking utensil enters the first non-dehumidification cooking duration, the gas replacement module is in a deactivated state. In this case, moisture of the ingredient is evaporated as the ingredient is heated in the cooking chamber, increasing the humidity in the cooking chamber. The humidity in the cooking chamber reaches its peak at an end of the first non-dehumidification cooking duration. The control method further comprises actions at S401 and S402. At S401, the gas replacement module is opened in response to the cooking duration reaching the dehumidification cooking duration, to replace the gas in the cooking chamber with the outside air, reducing the humidity in the cooking chamber. At S402, the gas replacement module is closed subsequent to an end of the dehumidification cooking duration, i.e., in response to the cooking duration reaching the non-dehumidification cooking duration, and in this case, the gas in the cooking chamber cannot be replaced with the outside air. In this case, the cooking duration reaches the second non-dehumidification cooking duration. When the second non-dehumidification cooking duration ends, the cooking is terminated.

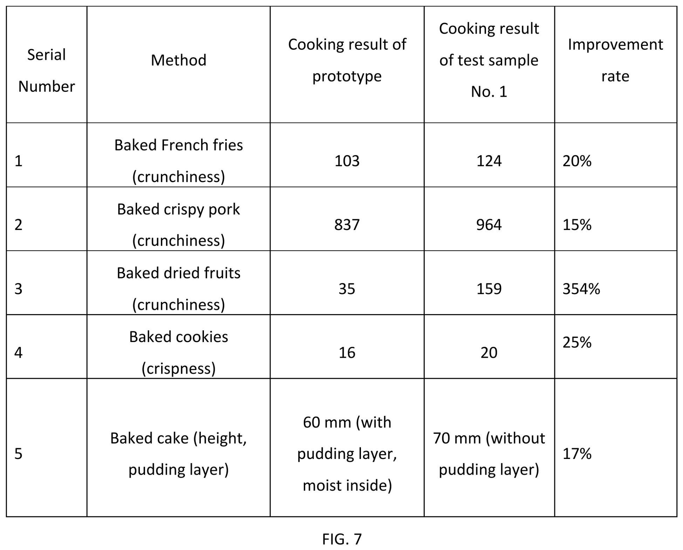

As shown in FIG. 7, a test sample No. 1 of the present invention has a better cooking effect on food, which can improve crispness of roasted food, reduce occurrence of a pudding layer in bread and cake food, and increase a baking height. It should be noted that the test sample No. 1 refers to a cooking utensil with the control method of the present invention, and a prototype refers to a cooking utensil without the control method of the present invention.

In some embodiments of the present invention, the first non-dehumidification cooking duration accounts for 20% to 40% of the total cooking duration, and the dehumidification cooking duration accounts for 50% to 70% of the total cooking duration.

The total cooking duration is determined based on the type of the ingredient. The total cooking duration may be set within a range of 15 minutes to 240 minutes. For example, a cooking duration for a cake ingredient typically ranges from 40 minutes to 60 minutes; a cooking duration for a dried fruit ingredient typically ranges from 120 minutes to 240 minutes; and a cooking duration for a meat ingredient typically ranges from 15 minutes to 60 minutes. By setting the total cooking duration to range from 15 minutes to 240 minutes, with the first non-dehumidification cooking duration accounting for 20% to 40% of the total cooking duration and the dehumidification cooking duration accounting for 50% to 70% of the total cooking duration, the cooking requirements for the ingredients of the different types can be met, improving the cooking effect of the cooking utensil on the ingredients while reducing the possibility of the user being scalded by the high-temperature and high-humidity gas when opening the cooking chamber. In this way, the user experience is enhanced.

According to the present invention, a computer-readable storage medium is provided, which has a control program of a cooking utensil stored thereon. The control program for the cooking utensil, when executed by a processor, implements the above-mentioned control method.

For the computer-readable storage medium according to the embodiments of the present invention, by performing the control method of the cooking utensil stored thereon by the processor, the cooking effect of the ingredient is improved, and the possibility of the user being scalded by the high-temperature and high-humidity gas when opening the cooking chamber is reduced. In this way, the user experience is enhanced.

FIG. 4 is a structural block diagram of a cooking utensil according to an embodiment of the present invention.

Based on the aforementioned embodiments of the present invention, referring to FIG. 4, embodiments of the present invention further provide a cooking utensil 100. The cooking utensil 100 comprises a memory 101, a processor 102, and a control method of a cooking utensil stored in the memory 101 and executable on the processor 102. The processor is configured to, when executing the control program, implement the control method according to the aforementioned embodiments of the present invention.

The cooking utensil 100 according to the embodiments of the present invention comprises the memory 101 and the processor 102. The processor 102 is configured to execute the control method of the cooking utensil stored on the memory 101. Therefore, the cooking effect of the ingredient is improved, and the possibility of the user being scalded by the high-temperature and high-humidity gas when opening the cooking chamber is reduced. In this way, the user experience is enhanced.

FIG. 5 is a structural block diagram of a cooking apparatus of a cooking utensil according to an embodiment of the present invention.

As shown in FIG. 5, embodiments of the present invention further provide a cooking apparatus 200 of a cooking utensil. The cooking apparatus 200 of the cooking utensil comprises an acquiring module 201, a determination module 202, and a generation module 203.

The acquiring module 201 is configured to acquire a type of an ingredient in a cooking chamber of the cooking utensil. The determination module 202 is configured to determine a total cooking duration based on the type of the ingredient and determine a dehumidification cooking duration and a non-dehumidification cooking duration for the cooking utensil based on the type of the ingredient or the total cooking duration. The control module 203 is configured to control the gas replacement module based on the dehumidification cooking duration and the non-dehumidification cooking duration to replace gas in the cooking chamber with outside air.

In some embodiments of the present invention, the acquiring module 201 may further be configured to start the cooking utensil, and the determination module may further be configured to determine a preheating duration for the ingredient based on the information of the type of the ingredient.

In summary, the cooking apparatus for the cooking utensil according to the embodiments of the present invention can improve the cooking effect of the ingredient, and reduce the possibility of the user being scalded by high-temperature and high-humidity gas when opening the cooking chamber. In this way, the user experience is enhanced.

In addition, other structures and functions of the cooking apparatus of the cooking utensil according to the embodiments of the present invention are known to those skilled in the art, and details thereof are omitted herein to reduce redundancy.

It should be noted that The logic and/or step described in other manners herein or shown in the flowchart, e.g., a particular sequence table of executable instructions for realizing the logical function, may be specifically achieved in any computer-readable medium to be used by an instruction execution system, device or equipment (such as a system based on computers, a system comprising a processing module, or other systems capable of obtaining instructions from the instruction execution system, device and equipment and executing the instructions), or to be used in combination with the instruction execution system, device and equipment. As to the specification, "the computer-readable medium" may be any device adaptive for comprising, storing, communicating, propagating or transferring programs to be used by or in combination with the instruction execution system, device or equipment. More specific examples of the computer-readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present invention may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "an example," "a specific example," or "some examples," means that a particular feature, structure, material, or characteristic described in connection with the embodiment or example is comprised in at least one embodiment or example of the present invention. The appearances of the above phrases in various places throughout this specification are not necessarily referring to the same embodiment or example of the present invention. Furthermore, the particular features, structures, materials, or characteristics may be combined in any suitable manner in one or more embodiments or examples.

In the description of the present invention, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anticlockwise", "axial", "radial" and "circumference" refer to the directions and location relations which are the directions and location relations illustrated in the drawings, and for describing the present invention and for describing in simple, and which are not intended to indicate or imply that the device or the elements are disposed to locate at the specific directions or are structured and performed in the specific directions, which could not to be understood as the limitation of the present invention.

In addition, the terms such as "first" and "second" used in the embodiments of the present invention are used herein for purposes of description and are not intended to indicate or imply relative importance, or to implicitly show the number of indicated technical features. Therefore, features defined by the terms such as "first" and "second" in the embodiments of the present invention may explicitly or implicitly indicate that the embodiment comprises at least one of such features. In the description of the present invention, the term "a plurality of" means at least two or two or more, for example, two, three, four, unless specified otherwise in the embodiments.

In the description of the present invention, unless specified or limited otherwise, the terms "mounted," "connected," "coupled" and "fixed" are understood broadly, such as fixed, detachable mountings, connections and couplings or integrated. It can be understood that they may be mechanical or electrical mountings, connections and couplings. Of course, they also may be direct and via media indirect mountings, connections, and couplings, and further can be inner mountings, connections and couplings of two components or interaction relations between two components. For those of ordinary skill in the art, the specific meaning of the above-mentioned terms in the embodiments of the present invention can be understood according to specific circumstances.

In the present invention, unless specified or limited otherwise, a first characteristic is "on" or "under" a second characteristic refers to the first characteristic and the second characteristic may be direct or via media indirect mountings, connections, and couplings. In addition, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

Although embodiments of the present invention have been illustrated and described above, it should be understood that above embodiments are merely illustrative and cannot be construed as limitations of the present invention. Those of ordinary skill in the art can make changes, alternatives, and modifications to these embodiments without departing from spirit, principles and scope of the present invention.

## Claims

1. A control method of a cooking utensil, the cooking utensil being provided with a gas replacement module, the method comprising:
acquiring a type of an ingredient in a cooking chamber of the cooking utensil;
determining a total cooking duration based on the type of the ingredient;
determining a dehumidification cooking duration and a non-dehumidification cooking duration of the cooking utensil based on the type of the ingredient or the total cooking duration; and
controlling the gas replacement module based on the dehumidification cooking duration and the non-dehumidification cooking duration to replace gas in the cooking chamber with outside air.

2. The control method according to claim 1, wherein the gas replacement module comprises:
a gas outlet formed at a top of the cooking utensil;
an air inlet formed at a side wall of a lower part of the cooking utensil;
a valve having an end rotatably connected to an end of the air inlet, the valve being configured to control opening and closing of the air inlet; and
a fan arranged to correspond to the valve,
wherein said controlling the gas replacement module based on the dehumidification cooking duration and the non-dehumidification cooking duration comprises:
controlling, in response to a cooking duration of the cooking utensil reaching the dehumidification cooking duration, the fan to operate to open the valve, to allow the outside air to flow into the cooking chamber through the air inlet and to discharge the gas in the cooking chamber through the gas outlet, completing gas replacement; and
controlling, in response to the cooking duration of the cooking utensil reaching the non-dehumidification cooking duration, the fan to stop operating, to prohibit the outside air from flowing into the cooking chamber through the air inlet.

3. The control method according to claim 1, wherein the gas replacement module comprises:
a gas outlet formed at a top of the cooking utensil;
an air inlet formed at a side wall of a lower part of the cooking utensil;
a valve having an end rotatably connected to an end of the air inlet, the valve being configured to control opening and closing of the air inlet; and
a fan arranged to correspond to the gas outlet,
wherein said controlling the gas replacement module based on the dehumidification cooking duration and the non-dehumidification cooking duration comprises:
controlling, in response to a cooking duration of the cooking utensil reaching the dehumidification cooking duration, the fan to operate, to discharge the gas in the cooking chamber through the gas outlet and to allow the outside air to flow into the cooking chamber through the valve, completing gas replacement; and
controlling, in response to the cooking duration of the cooking utensil reaching the non-dehumidification cooking duration, the fan to stop operating, to prohibit the outside air from flowing into the cooking chamber through the air inlet.

4. The control method according to claim 1, wherein the gas replacement module comprises:
a gas outlet formed at a top of the cooking utensil;
a fan arranged to correspond to the gas outlet; and
a push door structure disposed at a side of the cooking utensil, the push door structure being configured to increase a gas exchange area of the cooking chamber,
wherein said controlling the gas replacement module based on the dehumidification cooking duration and the non-dehumidification cooking duration comprises:
controlling, in response to a cooking duration of the cooking utensil reaching the dehumidification cooking duration, the fan to operate and the push door structure to open, to discharge the gas in the cooking chamber through the gas outlet and an opening of the push door structure and to allow the outside air to flow into the cooking chamber through the opening of the push door structure, completing gas replacement; and
controlling, in response to the cooking duration of the cooking utensil reaching the non-dehumidification cooking duration, the fan to stop operating and the push door structure to close, to prohibit the outside air from flowing into the cooking chamber through the opening of the push door structure.

5. The control method according to claim 1, wherein the gas replacement module comprises:
a gas outlet formed at a top of the cooking utensil;
an air inlet formed at a lower part of a side of the cooking utensil;
a valve having an end rotatably connected to an end of the air inlet, the valve being configured to control opening and closing of the air inlet;
a fan arranged to correspond to the valve; and
a push door structure disposed at an other side of the cooking utensil, the push door structure being configured to increase a gas exchange area of the cooking chamber,
wherein said controlling the gas replacement module based on the dehumidification cooking duration and the non-dehumidification cooking duration comprises:
controlling, in response to a cooking duration of the cooking utensil reaching the dehumidification cooking duration, the fan to operate and the push door structure to open, to discharge the gas in the cooking chamber through the gas outlet and an opening of the push door structure and to allow the outside air to flow into the cooking chamber through the air inlet and the opening of the push door structure, completing gas replacement; and
controlling, in response to the cooking duration of the cooking utensil reaching the non-dehumidification cooking duration, the fan to stop operating and the push door structure to close, to prohibit the outside air from flowing into the cooking chamber through the air inlet and the opening of the push door structure.

6. The control method according to any one of claims 1 to 5, wherein:
the non-dehumidification cooking duration comprises a first non-dehumidification cooking duration and a second non-dehumidification cooking duration; and
the total cooking duration comprises the first non-dehumidification cooking duration, the dehumidification cooking duration, and the second non-dehumidification cooking duration.

7. The control method according to claim 6, wherein:
the first non-dehumidification cooking duration accounts for 20% to 40% of the total cooking duration; and
the dehumidification cooking duration accounts for 50% to 70% of the total cooking duration.

8. A computer-readable storage medium, having a control program of a cooking utensil stored thereon, wherein the control program of the cooking utensil, when executed by a processor, implements a control method of the cooking utensil according to any one of claims 1 to 7.

9. A cooking utensil, comprising:
a memory;
a processor; and
a control program for a cooking utensil stored on the memory and executable on the processor,
wherein the processor is configured to, when executing the control program, implement the control method according to any one of claims 1 to 7.

10. A control apparatus of a cooking utensil, the cooking utensil being provided with a gas replacement module, the control apparatus comprising:
an acquiring module configured to acquire a type of an ingredient in a cooking chamber of the cooking utensil;
a determination module configured to determine a total cooking duration based on the type of the ingredient and determine a dehumidification cooking duration and a non-dehumidification cooking duration of the cooking utensil based on the type of the ingredient or the total cooking duration; and
a control module configured to control the gas replacement module based on the dehumidification cooking duration and the non-dehumidification cooking duration to replace gas in the cooking chamber with outside air.
